# EUROPÄISCHE PATENTSCHRIFT

(11) **EP 4 449 679 B1**
(45) Veröffentlichungstag und Bekanntmachung des Hinweises auf die Patenterteilung: **18.11.2026**
(21) Anmeldenummer: 22839240.3
(22) Anmeldetag: 15.12.2022
(51) Int. Cl.: H04L 25/02

(54) **SIGNALÜBERTRAGUNGSANORDNUNG MIT KAPAZITIVER KOPPLUNG**
SIGNAL TRANSFER ASSEMBLY WITH CAPACITIVE COUPLING
ENSEMBLE DE TRANSFERT DE SIGNAL AVEC COUPLAGE CAPACITIF

(30) Priorität: 16.12.2021 AT 510082021
(43) Veröffentlichungstag der Anmeldung: 23.10.2024
(73) Patentinhaber: ABB Schweiz AG, 5400 Baden (CH)
(72) Erfinder: WINKLER, Norbert, 5142 Eggelsberg (AT); BURGER, Manuel, 5142 Eggelsberg (AT); SCHNEIDER, Christian, 5142 Eggelsberg (AT)
(74) Vertreter: Weiss Patentanwalts GmbH
(86) Internationale Anmeldenummer: PCT/EP2022/086027
(87) Internationale Veröffentlichungsnummer: WO 2023/111123

(56) Entgegenhaltungen:
- CN-U- 212 111 556
- DE-A1- 102019 009 233

## Beschreibung

Die gegenständliche Erfindung betrifft eine funktional sichere Signalübertragungsanordnung, welche eine Signalquelle mit einem Signalquellenausgang, eine Signalsenke mit einem Signalsenkeneingang sowie einer Signalsenken-Eingangskapazität, und einen Kommunikationskanal, der den Signalquellenausgang mit dem Signalsenkeneingang elektrisch leitend verbindet, umfasst. Der Kommunikationskanal weist einen ersten Signalanschluss zur Verbindung des Kommunikationskanals mit dem Signalquellenausgang, einen zweiten Signalanschluss zur Verbindung des Kommunikationskanals mit dem Signalsenkeneingang und zumindest einen in Serie zwischen den ersten Signalanschluss und den zweiten Signalanschluss geschalteten ohmschen Widerstand auf, um ein von der Signalquelle stammendes elektrisches Quellensignal in ein in die Signalsenke eingehendes elektrisches Senkensignal zu übertragen. Der ohmsche Widerstand bildet dabei mit der Signalsenken-Eingangskapazität der Signalsenke ein Tiefpassfilter mit einer Filtergrenzfrequenz, welches das Quellensignal bei der Übertragung in das Senkensignal einer Tiefpassfilterung unterzieht.

Sicherheitskonzepte von technischen Geräten, Anlagen und Vorrichtungen, von Fortbewegungsmitteln aber auch von komplexen, automatisierten Systemen zielen darauf ab, Mensch und/oder Umwelt vor Fehlfunktionen eines zu überwachenden technischen Systems zu schützen. Als wesentliche Bestandteile von Sicherheitskonzepten sind hierbei sichere Kommunikationskanäle zu nennen, über die Informationen über Nutzdaten, mögliche Schadensszenarien, Gefahren oder auch Fehlfunktionen des zu überwachenden technischen Systems übermittelt werden. Für eine Detektion von Schadensszenarien, von Gefahren oder auch von Fehlfunktionen werden üblicherweise Sicherheitssensoren eingesetzt, wie Lichtschranken und/oder Notausschalter und/oder Sicherheitslichtgitter. Sicherheitssensoren werden in diesem Zusammenhang auch als sichere Ausgangselemente oder "Signalquellen" bezeichnet. Bevorzugt kommunizieren Sicherheitssensoren über die genannten sicheren Kommunikationskanäle mit sogenannten sicheren Eingangselementen (nachfolgend als "Signalsenke" bezeichnet), wobei ein sicheres Eingangselement bzw. eine sichere Signalsenke beispielsweise als Steuereinheit ausgeführt sein kann, welche in der Lage ist, sogenannte Sicherheitsfunktionen auszulösen, wie STO, SSO, usw.

Aufgrund des Erfordernisses, Informationen über eine neu eingetretene bzw. neu detektierte Gefahrensituation schnell und sicher z.B. an eine Signalsenke weiterzugeben, kommt im Bereich der funktionalen Sicherheit den Themen Kommunikation und schnellem sowie sicherem Datenaustausch eine wichtige Bedeutung zu. Die Forderung nach sicheren Kommunikationskanälen führt in Kombination mit der oft gleichzeitig gegebenen Forderung nach schnellen Datenübertragungsraten jedoch vielfach zu Problemstellungen. Als "schnell" sind in diesem Zusammenhang Signale mit Signalfrequenzen größer als 1MHz zu verstehen, bei Signalen mit Signalfrequenzen kleiner als 1kHz spricht man demgegenüber von "langsamen Signalen". In diesem Sinn stehen Maßnahmen und Mittel zur Sicherstellung von sicheren Kommunikationskanälen oft dem Wunsch nach einer schnellen Datenübertragung entgegen. So ist es bei der Auslegung von sicheren Kommunikationskanälen in vielen Fällen von Bedeutung, die in einem Fehlerfall über einen sicheren Kommunikationskanal übertragbare elektrische Energie zu limitieren. Zu diesem Zweck werden bevorzugt Begrenzungs- und/oder Pufferelemente eingesetzt, wie geeignete Vorwiderstände oder Schutzdioden, was sich jedoch negativ auf die erreichbaren Datenübertragungsraten auswirken kann.

Im Bereich der funktionalen Sicherheit hat sich zu diesem Zweck insbesondere die Verwendung von ohmschen MELF-Widerständen ("Metal Electrode Leadless Faces"-Widerstände) hervorgetan. MELF-Widerstände sind üblicherweise als zylinderförmige SMD-Bauteile ("Surface-mounted device") mit zwei Anschlüssen ausgeführt, wobei ihre Stirnflächen als Anschlusskontakte der Verbindung mit weiteren Bauteilen dienen. Obwohl MELF-Widerstände üblicherweise größer und teurer sind als in Chip-Bauform ausgeführte Widerstände, werden MELF-Widerstände in vielen Anwendungsfällen eingesetzt, insbesondere in Anwendungsfällen der funktionalen Sicherheit. Das liegt unter anderem daran, dass in Bezug auf Kenngrößen wie Impulsbelastbarkeit, Temperaturstabilität, Langzeitstabilität und Spannungsfestigkeit sowie genau spezifiziertem Verhalten in Fehlerfällen (Sicherungs-Widerstand) mit MELF-Widerständen gute Kennwerte erreicht werden können.

Zum Zweck der Begrenzung der über einen sicheren Kommunikationskanal übertragbaren elektrischen Energie werden MELF-Widerstände üblicherweise seriell in einen Kommunikationskanal geschaltet. Ein derartiger Einsatz von MELF-Widerständen wird auch als "Trennung" von miteinander kommunizierenden (Kommunikations-) Elementen bezeichnet, beispielsweise von (sicheren) Signalquellen mit (sicheren) Signalsenken. Obwohl über einen MELF-Widerstand auf die genannte Weise eine Verbindung zum Datenaustausch hergestellt wird, werden die genannten Signalquellen und Signalsenken durch den MELF-Widerstand dabei in dem Sinne getrennt, als dass in einem Fehlerfall, wie einem Kurzschluss in einem der kommunizierenden Elemente, die in das jeweils andere Element (also von Signalquelle in Signalsenke oder umgekehrt) übertragbare elektrische Energie begrenzt wird. Für ein derartiges Szenario ist auch die Bezeichnung der "Trennung eines Signals" gebräuchlich, wobei als Signal das über den Kommunikationskanal zu übertragende Signal zu verstehen ist. Die obigen Gedanken sind auch in der Norm EN13849-2 widergespiegelt, worin für MELF-Widerstände ein Fehlerausschluss für den Fehlerfall Kurzschluss als zulässig erklärt wird. Demnach können MELF-Widerstände für Trennungen im Bereich der funktionalen Sicherheit herangezogen werden. Der Widerstand sollte dabei jedoch so ausgelegt werden, dass er auch im Fehlerfall nicht überlastet wird. Unter anderem deshalb sind MELF-Widerstände in der Regel größer als 1kΩ. Durch eine Trennung mittels MELF-Widerständen kann vielfach auch eine Rückwirkungsfreiheit zwischen einer Signalquelle und einer Signalsenke erreicht werden, was bei Fehlerfällen in entweder der Signalquelle oder der Signalsenke vorteilhaft ist.

Bei einer Kommunikation zwischen einer sicheren Signalquelle mit einer sicheren Signalsenke sind in der Signalsenke vielfach Signaltreiber vorgesehen. Signaltreiber dienen üblicherweise der Verbesserung der Übertragungsqualität bei der Übertragung von elektrischen Signalen. Im gegenständlichen Zusammenhang finden Signaltreiber aus mehreren Gründen Verwendung, unter anderem um definierte Eingangskapazitäten in den Signalsenken sicherzustellen, oder auch um bei unterschiedlichen Beschaltungen eines Kommunikationskanals stets möglichst ähnliche Übertragungsverhältnisse gewährleisten zu können. Signaltreiber sind beispielsweise als Verstärkerschaltungen ausgeführt, die Operationsverstärker (OPVs) oder Transistoren aufweisen können. Wie erwähnt bringen Signaltreiber allerdings Eingangskapazitäten ("Gate-Kapazitäten") mit sich.

Gerade bei der Verwendung von seriell verschalteten MELF-Widerständen zur Trennung von Signalen sind die genannten Eingangskapazitäten von Bedeutung, welche natürlich nicht nur durch die Verwendung von Signaltreibern verursacht sein können, sondern auch aufgrund der räumlichen Nähe von elektronischen Komponenten in einer Signalsenke entstehen können. So können MELF-Widerstände mit seriell verschalteten (parasitären) Eingangskapazitäten von Signalsenken RC-Glieder ausbilden. RC-Glieder stellen bekanntermaßen eine mögliche Implementierung eines Tiefpassfilters dar. Bildet ein Kommunikationskanal, der ein von einer Signalquelle stammendes Quellensignal in ein bei einer Signalsenke ankommendes Senkensignal überträgt, auf die beschriebene Weise ein RC-Glied bzw. einen Tiefpass aus, stellt das Quellensignal das Eingangssignal in das RC-Glied bzw. den Tiefpass und das Senkensignal das erzeugte Ausgangssignal dar. Das Quellensignal wird dabei einer Tiefpassfilterung unterzogen, was insbesondere eine Dämpfung höherer Frequenzen mit sich bringt. Für eine nähere Beschreibung einer derartigen Dämpfung wird in vielen Fällen eine Grenzfrequenz des Tiefpasses herangezogen.

Werden hohe und folglich schnelle Frequenzen stark gedämpft, können sie vielfach nicht mehr für eine Informationsübertragung eingesetzt werden. Eine Dämpfung von Frequenzen, z.B. aufgrund von Tiefpassverhalten, verringert demnach die realisierbaren Datenübertragungsgeschwindigkeiten.

Allgemein beschreibt eine Grenzfrequenz eine Frequenz eines Übertragungssystems, bei deren Überschreitung durch die Frequenz des Eingangssignals die Signalamplitude des Ausgangssignals unter einen bestimmten Wert sinkt. Oft wird der allgemeine Begriff der Grenzfrequenz mit der konkreten -3dB-Grenzfrequenz gleichgesetzt, bei der also die Signalamplitude des Ausgangssignals auf den $\frac{1}{\sqrt{2}}$-fachen Wert bzw. auf 70,7% der Signalamplitude des Eingangssignals abgesunken ist.

In direktem Zusammenhang mit der -3dB-Grenzfrequenz eines Tiefpasses und damit eines Kommunikationskanals stehen hierbei die Bandbreite des Kommunikationskanals sowie die mit diesem erreichbare Datenrate bzw. Datenübertragungsgeschwindigkeit. Die Bandbreite beschreibt für einen Kommunikationskanal bekanntermaßen die Breite des Intervalls zwischen einer unteren und einer oberen Grenzfrequenz. Die untere Grenzfrequenz kann auch 0Hz sein. Im gegenständlichen Zusammenhang wird als Bandbreite die Breite des Intervalls zwischen 0Hz und der -3dB-Grenzfrequenz eines Kommunikationskanals verstanden. Wie aus der Nachrichtentechnik hinlänglich bekannt ist, steht in Fällen ohne Signal- bzw. Messrauschen, wie z.B. weißem Rauschen, die maximal erreichbare, fehlerfreie Datenübertragungsrate C_{N} mit der Bandbreite B eines Übertragungskanals über die Formel *C_{N}* = 2B in Zusammenhang. Daraus lässt sich ableiten, dass eine geringere Bandbreite eine geringere erreichbare Datenübertragungsgeschwindigkeit zur Folge hat. Das wiederum kann zur Folge haben, dass aufgrund der Filterwirkung, die durch ein aus einem MELF-Widerstand und einer Signalsenken-Eingangskapazität gebildetes RC-Glied in einen Kommunikationskanal eingebracht wird, schnelle Signale zum Teil nicht mehr übertragen werden können.

Ähnliche Ausführungen können auch dem Stand der Technik entnommen werden. So beschreibt die EP 3 355 077 B1 die Trennung von über optische Elemente eingekoppelten Signalen. Für Anwendungen, in denen keine optischen und demnach lichtempfindlichen Bauteile vorgesehen sind, ist die in der EP 3 355 077 B1 offenbarte Lehre jedoch nicht einsetzbar. Daneben beschreibt die WO 2013/029651 A1 eine Potentialtrennungsschaltung, wobei das Thema Datenübertragungsgeschwindigkeit berücksichtigt wird. Die WO 2013/029651 A1 behandelt jedoch keine sicheren Elemente oder sicheren Kommunikationskanäle, weswegen auf Spezifika des Bereichs der funktionalen Sicherheit nicht näher eingegangen wird.

Für sämtliche der zitierten Druckschriften gilt, dass sie keine Überlegungen präsentieren, anhand derer eine gegebene Bandbreite eines sicheren Kommunikationskanals erhöht werden könnte. Insbesondere wird auf die Frage, wie ein bereits sicherer Kommunikationskanal durch geeignete Maßnahmen gleichzeitig sicherer und ebenso schneller gemacht werden kann, nicht eingegangen.

Der Schrift CN 212 111 556 U ist ferner eine Signalanpassung am Eingang eines Oszilloskops zu entnehmen, und DE 10 2019 009 233 A1 offenbart eine Treiberschaltung für ein oder mehrere optische Senderbauteile sowie eine Empfängerschaltung für ein oder mehrere optische Empfangsbauteile zur optischen drahtlosen Kommunikation. Weder CN 212 111 556 U, noch DE 10 2019 009 233 A1 gehen jedoch auf die besonderen Anforderungen funktional sicherer Vorrichtungen ein. Auch bleiben die genannten Schriften vage in Hinblick auf die Frage, wie die offenbarten Schaltungen konkret realisiert werden sollen, insbesondere wie die verwendeten Bauteile ausgelegt werden sollen.

Es ist demnach eine Aufgabe der gegenständlichen Erfindung, die Bandbreite eines funktional sicheren Kommunikationskanals zu erhöhen.

Diese Aufgabe wird erfindungsgemäß durch die Merkmale der unabhängigen Ansprüche gelöst. Diese beschreiben eine Signalübertragungsanordnung, welche eine Signalquelle mit einem Signalquellenausgang, eine Signalsenke mit einem Signalsenkeneingang sowie einer Signalsenken-Eingangskapazität und einen Kommunikationskanal, der den Signalquellenausgang mit dem Signalsenkeneingang elektrisch leitend verbindet, umfasst, wobei der Kommunikationskanal einen ersten Signalanschluss zur Verbindung des Kommunikationskanals mit dem Signalquellenausgang, einen zweiten Signalanschluss zur Verbindung des Kommunikationskanals mit dem Signalsenkeneingang und zumindest einen in Serie zwischen den ersten Signalanschluss und den zweiten Signalanschluss geschalteten ohmschen Widerstand aufweist, um ein von der Signalquelle stammendes elektrisches Quellensignal in ein in die Signalsenke eingehendes elektrisches Senkensignal zu übertragen, wobei der zumindest eine ohmsche Widerstand des Kommunikationskanals mit der Signalsenken-Eingangskapazität der Signalsenke ein Tiefpassfilter mit einer Filtergrenzfrequenz bildet, welches das Quellensignal bei der Übertragung in das Senkensignal einer Tiefpassfilterung unterzieht. Das elektrische Quellensignal sowie das elektrische Senkensignal können beispielsweise als elektrische Ströme oder als elektrische Spannungen vorliegen.

Die Signalquelle und die Signalsenke können dabei wie erwähnt Kommunikationselemente aus dem Bereich der funktionalen Sicherheit sein. So kann die Signalquelle durch einen Sicherheitssensor wie eine Lichtschranke gegeben sein, die Signalsenke wiederum durch eine Steuerungseinheit, die in der Lage ist, eine Sicherheitsfunktion eines technischen Systems auszulösen und/oder auszuführen. Wie erwähnt kann es sich beim genannten ohmschen Widerstand um einen MELF-Widerstand handeln, um eine in vielen Fällen erforderliche Trennung und damit Rückwirkungsfreiheit zwischen Signalquelle und Signalsenke zu ermöglichen.

Das angeführte Tiefpassfilter und seine Filterwirkung stehen wie beschrieben in direktem Zusammenhang mit der im Kommunikationskanal möglichen Datenübertragungsgeschwindigkeit, welche sich in der beschriebenen Weise aus der durch den Tiefpassfilter festgelegten Bandbreite des Kommunikationskanals ergibt. Ist die Filtergrenzfrequenz des Tiefpassfilters höher, dann ist die Bandbreite des Kommunikationskanals höher, wodurch sich eine höhere maximale Frequenz, die zur Übertragung genutzt werden kann, ergibt, was letztlich höhere Datenübertragungsgeschwindigkeiten und die Übertragung schnellerer Signale erlaubt.

Erfindungsgemäß ist für diese Signalübertragungsanordnung vorgesehen, in den Kommunikationskanal, zwischen den ersten Signalanschluss und den zweiten Signalanschluss und parallel zum zumindest einen ohmschen Widerstand, eine Serienschaltung aus zumindest zwei Kondensatoren zu schalten, welche die Filtergrenzfrequenz des Tiefpassfilters im Vergleich zu einem Kommunikationskanal ohne eine zum ohmschen Widerstand parallel geschaltete Serienschaltung aus zumindest zwei Kondensatoren erhöht und damit die Tiefpasswirkung des Tiefpassfilters reduziert. Als Reduktion der Tiefpasswirkung ist demnach die Erhöhung der durch den Tiefpass festgelegten Filtergrenzfrequenz zu verstehen. Wird die Filtergrenzfrequenz erhöht, erhöht sich die Bandbreite des Kommunikationskanals, was mit den genannten Vorteilen von erhöhten Bandbreiten einhergeht. Erstaunlich ist, dass durch die scheinbar einfache Maßnahme einer Parallelschaltung einer Serienschaltung aus zumindest zwei Kondensatoren eine signifikante Verbesserung des Übertragungsverhaltens des beschriebenen Kommunikationskanals erreicht werden kann.

Da die gegenständliche Erfindung eine Serienschaltung mehrerer Kondensatoren zur Reduktion der beschriebenen Tiefpasswirkung vorsieht, kann insbesondere die Fehlersicherheit in Bezug auf den Fehlerfall "Kurzschluss eines Kondensators" erhöht werden. Die durch die Serienschaltung mehrerer Kondensatoren entstehende Serienkapazität bildet hierbei mit der Eingangskapazität einen kapazitiven Spannungsteiler.

In einer bevorzugten Weise kann in den Kommunikationskanal der Signalübertragungsanordnung, in Serie zur zum zumindest einen ohmschen Widerstand parallel geschalteten Serienschaltung aus zumindest zwei Kondensatoren ein weiterer ohmscher Widerstand geschaltet sein. Diese Maßnahme kann getroffen werden, um in einer vorteilhaften Weise die Trennung, also die Rückwirkungsfreiheit, zwischen Signalsenke und Signalquelle zu erhöhen. In einer vorteilhaften Weise kann ein solcher ohmscher Widerstand ebenso als MELF-Widerstand ausgeführt werden. Die Ausführung der genannten ohmschen Widerstände als MELF- Widerstände stellt demnach eine besonders vorteilhafte Implementierungsvariante der gegenständlichen Erfindung dar.

Vorteilhafterweise ist die Serienschaltung aus zumindest zwei Kondensatoren ausgestaltet, die Filtergrenzfrequenz des Tiefpassfilters so weit zu erhöhen, dass eine im Quellensignal enthaltene und in die Signalsenke zu transportierende Information ohne Informationsverlust in das Senkensignal übertragen werden kann. Dazu werden die Kapazitäten der in der Serienschaltung vorgesehenen Kondensatoren vorteilhafterweise ausreichend groß gewählt.

Aus der Nachrichtentechnik ist hinlänglich bekannt, dass eine Übertragung von Information insbesondere dann ohne Informationsverlust erfolgen kann, wenn informationstragende Komponenten eines Signals, beispielsweise eine Sinuskomponente eines Signals, deren Amplitude zur Informationsübertragung moduliert wird, bei einer Übertragung nicht beeinträchtigt werden, wie z.B. durch einen Tiefpass gedämpft. Wird nun durch die erfindungsgemäße Serienschaltung aus Kondensatoren sichergestellt, dass die erhöhte Filtergrenzfrequenz über den Frequenzen sämtlicher informationstragender Signalkomponenten eines Quellensignals liegt, werden die informationstragenden Signalkomponenten offensichtlich nicht mehr oder nur mehr geringfügig beeinträchtigt. Eine Informationsübertragung wird so, zumindest weitgehend, ohne Informationsverlust möglich.

Erfindungsgemäß wird weiters die Kapazität jedes in der Serienschaltung vorgesehenen Kondensators jeweils um zumindest einen vorgegebenen Faktor größer als die Kapazität der Signalsenken-Eingangskapazität gewählt. Der Faktor entspricht hierbei mindestens dem Zweifachen der Anzahl der in der Serienschaltung vorgesehenen Kondensatoren. Auf diese Weise wird sichergestellt, dass die aufgrund der Serienschaltung aus Kondensatoren resultierende Filtergrenzfrequenz jedenfalls über der ursprünglichen Grenzfrequenz des ursprünglichen Kommunikationskanals liegt.

Besonders bevorzugt kann der genannte vorgegebene Faktor größer als das 1+√2 -Fache, oder größer als das 10-Fache, oder größer als das 100-Fache der Anzahl der in der Serienschaltung vorgesehenen Kondensatoren sein. Auf diese Weise ergibt sich, dass die Verstärkung des Kommunikationskanals, bzw. der Wert des Betragsganges des Frequenzganges des Kommunikationskanals, erst bei sehr hohen Frequenzen ein in der Praxis unvermeidbares Tiefpassverhalten aufweist.

In einer ebenso bevorzugten Weise kann der vorgegebene Faktor aber ebenso kleiner als das 1000-Fache, oder kleiner als das 500-Fache, oder kleiner als das 300-Fache der Anzahl der in der Serienschaltung vorgesehenen Kondensatoren gewählt werden.

Aufgrund der Tatsache, dass bei einer Serienschaltung von Kondensatoren die resultierende Gesamtkapazität kleiner ist als die kleinste Einzelkapazität der jeweiligen Kondensatoren, ergibt sich, dass eine ausreichend groß gewählte Gesamtkapazität einer Serienschaltung zu ebenso ausreichend groß gewählten Einzelkapazitäten führt. Im Rahmen der gegenständlichen Erfindung sind folglich auch die Kapazitäten der in der Serienschaltung vorgesehenen Kondensatoren stets jeweils so groß gewählt, dass auch jeder einzelne Kondensator der Serienschaltung alleine eine Erhöhung der Filtergrenzfrequenz herbeiführen würde, die eine Übertragung des Quellensignals in das Senkensignal ohne Informationsverlust sicherstellen würde. Das bedeutet, dass selbst wenn nur ein einzelner, ausgewählter Kondensator aus der Serienschaltung aus Kondensatoren parallel zum ohmschen Widerstand des Kommunikationskanals geschaltet würde, auch dieser einzelne, ausgewählte Kondensator dazu führen würde, dass die Filtergrenzfrequenz ausreichend weit angehoben würde.

Dieser Umstand ist insbesondere bei Schaltungen der funktionalen Sicherheit vorteilhaft. So kann selbst in Fällen, in denen bis auf einen Kondensator in der Serienschaltung aus Kondensatoren alle anderen Kondensatoren einen Defekt in Form eines Kurzschlusses aufweisen, nach wie vor eine intakte Kommunikation über den Kommunikationskanal sichergestellt werden. Auch deshalb wird durch die gegenständliche Erfindung die funktionale Sicherheit einer Signalübertragungsanordnung verbessert, nicht nur hinsichtlich der begrenzten, übertragbaren elektrischen Energie, sondern auch aufgrund der Tatsache, dass selbst bei einem Ausfall sämtlicher Kondensatoren bis auf einen Kondensator noch immer eine ausreichend schnelle Übertragung gewährleistet werden kann.

Darüber hinaus erweist es sich in vielen Fällen als vorteilhaft, am ersten Signalanschluss und/oder am zweiten Signalanschluss des Kommunikationskanals der erfindungsgemäßen Signalübertragungsanordnung eine Schutzdiode anzuschließen. Auf diese Weise kann der Kommunikationskanal vor Überspannungen geschützt werden.

Weiters ist es vielfach von Vorteil, in der Signalsenke einen Signaltreiber am SignalsenkenEingang anzuordnen, beispielsweise um das über den Kommunikationskanal übertragene Senkensignal zu verstärken oder auch bei unterschiedlichen weiteren Beschaltungen der Signalübertragungsanordnung ein definiertes Übertragungsverhalten über den Kommunikationskanal sicherstellen zu können. In solchen Fällen bringt der Signaltreiber üblicherweise eine Signaltreiber-Eingangskapazität in die Signalübertragungsanordnung ein, welche dann die Signalsenken-Eingangskapazität maßgeblich ausbildet oder die hauptsächliche Ursache für die Signalsenken-Eingangskapazität sein kann.

Es sei angemerkt, dass ein Signaltreiber auch an einer anderen Stelle angeordnet werden kann, beispielsweise außerhalb der Signalsenke. Im Rahmen der Erfindung wurde erkannt, dass eine gute Signalübertragung insbesondere dann erzielbar ist, wenn die räumliche Distanz zwischen dem Signaltreiber und dem ohmschen Widerstand des Kommunikationskanals gering ist. Zu diesem Zweck kann der Signaltreiber vorteilhafterweise in einer Distanz zum ohmschen Widerstand des Kommunikationskanals angeordnet sein, die geringer ist als die Hälfte der Länge des Kommunikationskanals, oder vorteilhafterweise in einer Distanz zum ohmschen Widerstand des Kommunikationskanals angeordnet sein, die geringer ist als ein Drittel der Länge des Kommunikationskanals, oder vorteilhafterweise in einer Distanz zum ohmschen Widerstand des Kommunikationskanals angeordnet sein, die geringer ist als ein Viertel der Länge des Kommunikationskanals.

Die gegenständliche Erfindung kann in der beschriebenen Form insbesondere im Bereich der funktionalen Sicherheit angewandt werden. Dabei erlaubt die Erfindung einen zuverlässigen Schutz von sicheren Kommunikationselementen insbesondere gegen Überspannungen, die in anderen, mit diesen elektrisch verbundenen Kommunikationselementen auftreten.

Die gegenständliche Erfindung wird nachfolgend unter Bezugnahme auf die Figuren 1a bis 3b näher erläutert, die beispielhaft, schematisch und nicht einschränkend vorteilhafte Ausgestaltungen der Erfindung zeigen. Dabei zeigt
Fig. 1a die Trennung eines langsamen Signals (Stand der Technik),
Fig. 1b einen Tiefpass in Form eines RC-Gliedes, wie er bei der in Fig.1a gezeigten Ausführungsform entsteht,
Fig. 2a die Trennung eines schnellen Signals mittels parallel geschalteter MELF-Widerstände,
Fig. 2b einen Tiefpass, wie er bei der in Fig.2a gezeigten Ausführungsform entsteht,
Fig. 3a die erfindungsgemäße Trennung zweier Schaltungskomponenten und
Fig. 3b einen bei der erfindungsgemäßen Trennung entstehenden Tiefpass sowie einen bei der erfindungsgemäßen Trennung entstehenden kapazitiven Spannungsteiler.

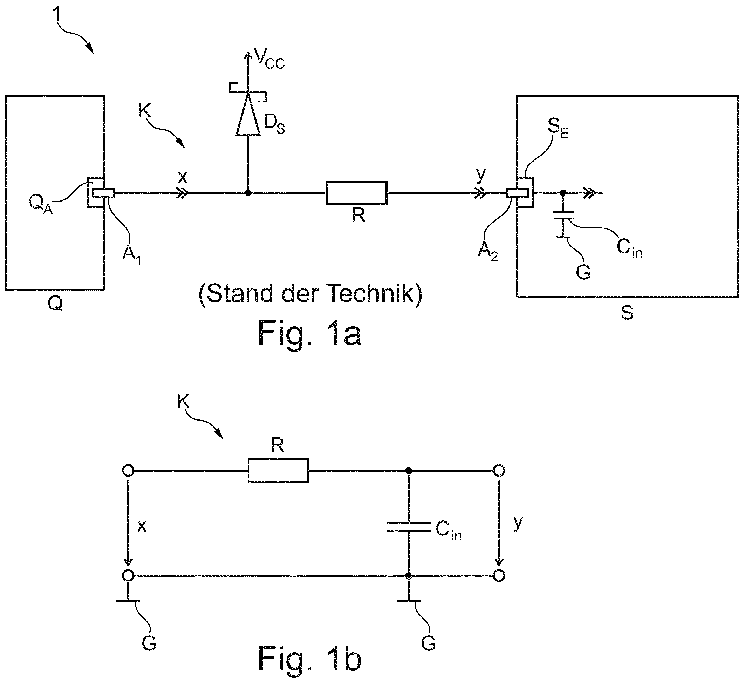

Figur 1a zeigt einen ersten, aus dem Stand der Technik bekannten Ansatz zur Trennung eines elektrischen Signals x. Die in Fig. 1a gezeigte Signalübertragungsanordnung 1 umfasst hierbei eine Signalquelle Q mit einem Signalquellenausgang Q_{A}, eine Signalsenke S mit einem Signalsenkeneingang S_{E} und einen, den Signalquellenausgang Q_{A} mit dem Signalsenkeneingang S_{E} verbindenden, Kommunikationskanal K. Unter der Trennung des Signals x ist, wie bereits ausgeführt, insbesondere die Limitierung der über den Kommunikationskanal K übertragbaren elektrischen Energie zu verstehen. Wie erwähnt ist für die gegenständliche Erfindung von wesentlicher Bedeutung, dass die Signalsenke S eine Signalsenken-Eingangskapazität Cᵢₙ aufweist. Wie erwähnt kann die Ursache für die Signalsenken-Eingangskapazität Cᵢₙ in der Verwendung eines Signaltreibers T, aber auch in anderen elektronischen Gründen liegen (insbesondere der räumlichen Nähe von elektronischen Bauteilen in der Signalsenke S).

Der Kommunikationskanal K weist in der in Fig. 1a gezeigten Ausführungsform einen ersten Signalanschluss A₁ zum Verbinden des Kommunikationskanals K mit dem Signalquellenausgang Q_{A}, einen zweiten Signalanschluss A₂ zum Verbinden des Kommunikationskanals K mit dem Signalsenkeneingang S_{E} und zumindest einen in Serie zwischen den ersten Signalanschluss A₁ und den zweiten Signalanschluss A₂ geschalteten ohmschen Widerstand R auf. Auf diese Weise wird eine elektrische Verbindung zwischen der Signalquelle Q und der Signalsenke S sichergestellt, womit es möglich wird, ein von der Signalquelle Q stammendes Quellensignal x in ein in die Signalsenke S eingehendes Senkensignal y zu übertragen.

Wie eingangs erwähnt, können Widerstände wie der in Fig. 1a gezeigte ohmsche Widerstand R als MELF-Widerstände ausgeführt werden. Auf die in Fig. 1a gezeigte Weise wird dabei eine Trennung der Signalquelle Q von der Signalsenke S sichergestellt, wobei über den Widerstand R zwar eine Verbindung zwischen Signalquelle Q und Signalsenke S zum Datenaustausch hergestellt wird, die in einem Fehlerfall übertragbare elektrische Energie aber begrenzt wird.

In der in Fig. 1a dargestellten Ausführung ist am ersten Signalanschluss A₁ des Kommunikationskanals K eine Schutzdiode D_{S} angeschlossen, um den

Kommunikationskanal K vor Überspannungen zu schützen. Eine derartige Schutzdiode D_{S} kann allerdings auch am zweiten Signalanschluss A₂ oder bei beiden Signalanschlüssen A₁ und A₂ angeschlossen sein. An der Seite, wo die Schutzdiode D_{S} angeordnet ist, wird durch die Schutzdiode D_{S} ein Überspannungsschutz sichergestellt, während der serielle MELF-Widerstand R den über den Kommunikationskanal K fließenden Strom limitiert.

Für die gegenständliche Erfindung ist weiters entscheidend, dass der ohmsche Widerstand R mit der Signalsenken-Eingangskapazität Cᵢₙ des Signalsenkeneingangs S_{E} eine RC-Reihenschaltung ("RC-Glied"), also einen Tiefpass ("RC-Tiefpass"), bildet, welche das Quellensignal x bei der Übertragung in das Senkensignal y tiefpassfiltert. Ein RC-Glied, wie er sich für die in Fig. 1a gezeigte Ausführungsform ergibt, ist in Fig. 1b dargestellt. Bekanntermaßen ergibt sich für ein derartiges RC-Glied die -3dB-Grenzfrequenz zu ${f}_{c} = \frac{1}{2 π} \frac{1}{{RC}_{in}}$ . Man erkennt hierbei unmittelbar, dass größere Widerstände R und größere Eingangskapazitäten die Grenzfrequenz senken, was sich entsprechend den obigen Ausführungen unmittelbar negativ auf die Bandbreite und die damit verbundene Datenübertragungsgeschwindigkeit auswirkt.

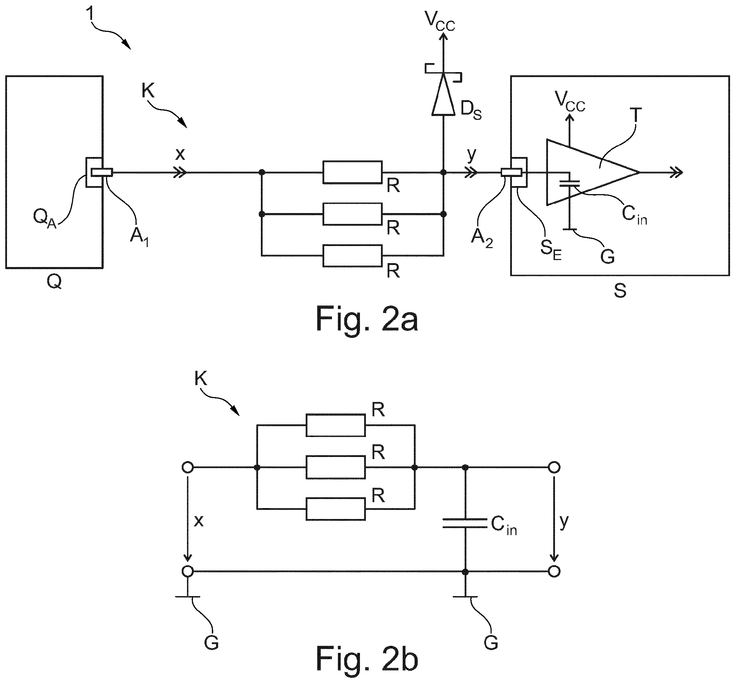

Ein Ansatz zur Behebung dieses Problems ist durch eine Parallelschaltung mehrerer Widerstände R gegeben, wie in Fig. 2a gezeigt ist. Dabei ist in der Signalsenke S auch ein Signaltreiber T angeordnet, welcher an den Signalsenkeneingang S_{E} angeschlossen ist, in dem der Eingang des Signaltreibers T elektrisch leitend mit dem Signalsenkeneingang S_{E} verbunden ist. Beispielsweise kann mit dem Signaltreiber T das über den Kommunikationskanal K übertragene Senkensignal y verstärkt werden, was sich in vielen Fällen als vorteilhaft erweisen kann. Im gezeigten Fall wird durch den Signaltreiber T eine definierte Signalsenken-Eingangskapazität Cᵢₙ in die dargestellte Schaltung eingebracht. Durch die Verwendung eines Signaltreibers T kann so auch für unterschiedliche Signalsenken S ein einheitliches Tiefpassverhalten sichergestellt werden. In der in Fig. 2a gezeigten Schaltung wird anhand der Schutzdioden D_{S} überdies sichergestellt, dass das **übertragene** Signal y im zulässigen Eingangsspannungsbereich des Signaltreibers T bleibt. Die Schutzdioden D_{S} können dazu z.B. auch durch aus der Elektronik hinlänglich bekannte Clamping-Dioden im Signaltreiber T ersetzt werden.

Durch die Parallelschaltung der gegenständlichen Widerstände R sinkt der gesamte wirksame Widerstand gemäß der Vorschrift ${R}_{ges} = \frac{1}{\frac{1}{R} + \frac{1}{R} + \frac{1}{R}}$, was entsprechend der oben genannten Formel die -3dB-Grenzfrequenz *f_{c}* des Kommunikationskanals K hebt. Damit steigt auch die Bandbreite des Kommunikationskanals K. Allerdings zeigen sich bei Parallelschaltungen von mehreren MELF-Widerständen andere Probleme. So führen insbesondere parasitäre Kapazitäten aufgrund der Metallelektroden von MELF-Widerständen zu einer erneuten Reduktion der -3dB-Grenzfrequenz, damit der Bandbreite usw. Aus diesem Grund stellt die Parallelschaltung einer Vielzahl von MELF-Widerständen keine Lösung für das Problem der schnellen Übertragung einer großen Anzahl von schnellen Signalen dar.

Fig. 2b zeigt für die in Fig. 2a gezeigte Signalübertragungsanordnung 1 das resultierende Ersatzschaltbild für das sich ergebende RC-Glied. Dabei ist der den wirksamen Gesamtwiderstand senkende Effekt der parallelen Widerstände R unmittelbar ersichtlich.

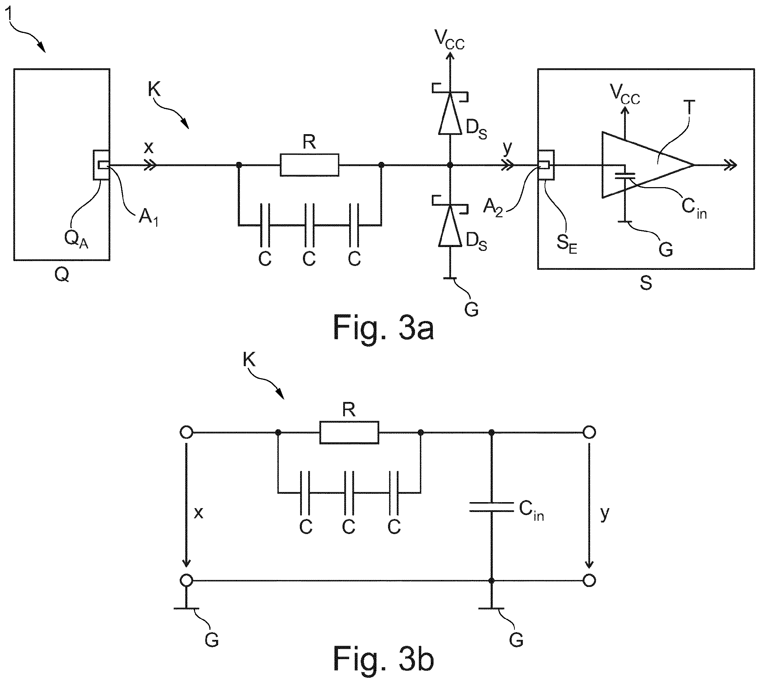

Die erfindungsgemäße Lösung des beschriebenen Problems ist in Fig. 3a dargestellt. In der dargestellten Ausführungsform wird mittels dreier in Serie geschalteter Kondensatoren C, die parallel zu dem bereits zuvor gezeigten Widerstand R geschaltet sind, eine Verbindung zwischen Signalquelle Q und Signalsenke S hergestellt.

Wie erwähnt kann die erfindungsgemäße Serienschaltung aus Kondensatoren aber auch durch eine beliebige andere Mehrzahl von Kondensatoren realisiert werden, insbesondere als Serienschaltung aus zwei Kondensatoren, oder als Serienschaltung aus vier oder mehr Kondensatoren.

Über die Kondensatoren C erfolgt dabei eine kapazitive Einkopplung des zu übertragenden Signals x. Das Signal x wird dabei über zumindest zwei oder, wie im gegenständlichen Fall, drei Kondensatoren C zur Senke S übertragen (kapazitive Kopplung). Durch die gegenständliche Erfindung werden so zur Trennung von Signalen, beispielsweise zwischen einer Signalquelle Q und einer Signalsenke S, auch Kondensatoren C, anstatt wie bisher ein oder mehrere hochohmige MELF-Widerstände, eingesetzt. Dies führt zu einer deutlichen Erhöhung der möglichen Bandbreite B für die Signalübertragung. Durch diese erfindungsgemäße Trennung des Eingangssignals x mithilfe von Kondensatoren C können deutlich schnellere Signale übertragen werden.

Die Übertragung von deutlich schnelleren Signalen bedeutet, dass informationstragende Quellensignale bzw. informationstragende Signalkomponenten von Quellensignalen deutlich höhere Frequenzen aufweisen können, insbesondere über 1MHz, und dennoch vom Kommunikationskanal nicht derart beeinflusst werden, dass mit einem Informationsverlust zu rechnen ist, beispielsweise durch eine Abschwächung der Amplitude des Senkensignals y aufgrund von Tiefpassverhalten. Ist das Quellensignal x beispielsweise ein Rechtecksignal mit einer Grundfrequenz von 1MHz, liegt die resultierende Filtergrenzfrequenz in vorteilhafter Weise deutlich über 1MHz, beispielsweise bei 5MHz oder bei 10MHz oder darüber.

Grundsätzlich ist es im Rahmen der gegenständlichen Erfindung vorteilhaft, die resultierende Filtergrenzfrequenz auf eine Frequenz zu legen, die mehr als dreimal oder mehr als fünfmal oder mehr als zehnmal so groß ist wie die Frequenz einer informationstragenden Signalkomponente des Quellensignals.

Die für diesen Fall entstehende Schaltung ist in Fig. 3b gezeigt. Wird für die in Fig. 3b gezeigte Schaltung, wie aus der Elektrotechnik hinlänglich bekannt, eine Gesamtkapazität der Reihenschaltung der gegebenen Kondensatoren als ${C}_{ges} = \frac{C}{3}$ ermittelt, zeigt sich durch leichte Rechnung, dass der Betragsgang des Frequenzganges des nun gegebenen Kommunikationskanals K nicht mehr unter den Wert $1 - \frac{{C}_{in}}{{C}_{ges} + {C}_{in}}$ fallen kann. Dieser Minimalwert des Betragsganges wird erst bei einem Grenzübergang der Frequenz gegen Unendlich, also *f* → ∞, erreicht. Der Minimalwert des Betragsganges kann hierbei überdies durch Vorgabe der parallel geschalteten Kondensatoren C frei gewählt werden, was einen wichtigen Vorteil der gegenständlichen Erfindung darstellt. So kann beispielsweise auch gewählt werden, wo der Betragsgang den die -3dB-Grenzfrequenz *f_{c}* und damit die Bandbreite definierenden Wert von $\frac{1}{\sqrt{2}}$ annehmen soll. Auch kann der oben genannte Grenzwert über $\frac{1}{\sqrt{2}}$ gelegt werden, womit in einer idealen Betrachtung gar keine -3dB-Grenzfrequenz *f_{c}* mehr existiert.

Bei der konkreten Wahl der Kapazitäten der Kondensatoren C ist erfindungsgemäß vorgesehen, die Kapazität jedes in der Serienschaltung vorgesehenen Kondensators C jeweils um zumindest einen vorgegebenen Faktor, welcher mindestens dem Zweifachen der Anzahl der in der Serienschaltung vorgesehenen Kondensatoren C entspricht, größer als die Kapazität der Signalsenken-Eingangskapazität Cᵢₙ zu wählen. Insbesondere kann der vorgegebene Faktor größer als das 1+√2 -Fache, oder größer als das 10-Fache, oder größer als das 100-Fache der Anzahl der in der Serienschaltung vorgesehenen Kondensatoren C sein. Bei zwei in der Serienschaltung vorgesehenen Kondensatoren ergeben sich so z.B. die Faktoren 2·(1+√2) oder 20 oder 200, sodass die Kapazitäten der Kondensatoren C jeweils größer sind als 2·(1+√2)·Cᵢₙ oder 20·Cᵢₙ oder 200·Cᵢₙ.

Auf diese Weise wird sichergestellt, dass die Verstärkung des Kommunikationskanals K, bzw. der Wert des Betragsganges des Frequenzganges des Kommunikationskanals K, erst **für sehr hohe** Frequenzen gegen den Wert $\frac{1}{\sqrt{2}}$ strebt, oder, wie erwähnt, im Rahmen einer idealisierten Betrachtung überhaupt über diesem Wert zu liegen kommt.

Hinsichtlich der Wahl des genannten Grenzwertes auf einen Wert über $\frac{1}{\sqrt{2}}$ sei angemerkt, dass es sich hierbei um eine idealisierte, theoretische Überlegung handelt. Bekanntermaßen weist jedes reale Übertragungssystem eine Grenzfrequenz, wie eine -3dB-Grenzfrequenz *f_{c}*, auf (im Extremfall stellt sich Tiefpassverhalten und damit einhergehend eine Grenzfrequenz spätestens dann ein, wenn Elektronen den mit sehr hohen Frequenzen verknüpften Bewegungen aufgrund ihrer Trägheit nicht mehr folgen können und damit die übertragenen Amplituden geringer werden).

Eine Wahl des Grenzwertes auf einen Wert über $\frac{1}{\sqrt{2}}$ bedeutet also lediglich in einer idealisierten, theoretischen Betrachtung, dass keine eine Bandbreite definierende -3dB-Grenzfrequenz *f_{c}* mehr existiert. In der praktischen Umsetzung einer der erfindungsgemäßen Signalübertragungsanordnung 1 wird sich natürlich nach wie vor eine -3dB-Grenzfrequenz *f_{c}* einstellen, allerdings mit einem sehr hohen Wert.

In vorteilhafter Weise kann zur Auslegung der Kapazitäten der Serienschaltung eine Mindest-Filtergrenzfrequenz f_{c,min} vorgegeben werden und die Serienschaltung aus zumindest zwei Kondensatoren C kann ausgestaltet sein, die Filtergrenzfrequenz f_{c} des Tiefpassfilters über die vorgegebene Mindest-Filtergrenzfrequenz f_{c,min} zu erhöhen.

Die Mindest-Filtergrenzfrequenz kann dabei bevorzugt über einer Signalfrequenz des Quellensignals liegen, insbesondere einer Signalfrequenz einer informationstragenden Signalkomponente des Quellensignals, sodass die vom Quellensignal transportierte Information nicht durch die Filterwirkung des Tiefpasses beeinträchtigt wird.

Die Verwendung von drei Kondensatoren C stellt hierbei eine bevorzugte Ausführungsform dar. Auf diese Weise ergeben sich keine nachteiligen Effekte aufgrund von parasitären Effekten, wie dies bei den oben genannten parasitären Kapazitäten von MELF-Widerständen der Fall ist. Diese Ausführungsform ist auch aus anderen Gründen bevorzugt, unter anderem da ein Kurzschluss eines Kondensators nach Norm EN13849-2 nicht ausgeschlossen werden kann und daher über eine Reihenschaltung mehrerer Kondensatoren C die Fehlersicherheit erhöht wird.

Gerade durch den Einsatz mehrerer in Serie geschalteter Kondensatoren wird die Fehlersicherheit der schnellen Übertragung erhöht. Da die Gesamtkapazität einer Serienschaltung von Kondensatoren kleiner ist als die kleinste Einzelkapazität, erhöht sich die wirksame Gesamtkapazität bei einem Ausfall einzelner Kondensatoren. Ist nun die Gesamtkapazität einer erfindungsgemäßen Serienschaltung von Kondensatoren ausreichend groß ausgelegt, um eine ausreichend schnelle Übertragung eines Signals über den Kommunikationskanal sicherstellen zu können, ist diese schnelle Übertragung ebenso sichergestellt, wenn nur noch ein Teil der vorgesehenen Kondensatoren wirksam ist, weil Kondensatoren aufgrund eines Kurschlusses ausgefallen sind. Für die praktische Anwendung der erfindungsgemäßen Signalübertragungsanordnung ist gerade dieser Umstand von großem Wert.

In einer weiteren möglichen Ausführungsform der gegenständlichen Erfindung ist es ebenso denkbar, zu den zum ohmschen Widerstand R parallel geschalteten, zumindest zwei Kondensatoren C in Serie einen weiteren ohmschen Widerstand zu schalten. Dadurch kann der oben beschriebene Ansatz von zum ursprünglichen Widerstand R parallelen Widerständen mit der erfindungsgemäßen Anwendung paralleler Kondensatoren C kombiniert werden.

Der ohmsche Widerstand R kann allerdings nicht gänzlich durch Kondensatoren C ersetzt werden, da es in vielen Fällen erforderlich ist, auch statische Signalpegel zu übertragen, was mit einer rein kapazitiven Kopplung nicht möglich ist.

Durch die gegenständliche Erfindung wird erreicht, dass bei gleichzeitiger Erhöhung der Bandbreite eines Kommunikationskanals K die Beeinflussung in einem Fehlerfall, beispielsweise zwischen Signalquelle Q und Signalsenke S, möglichst geringgehalten werden kann und in gewissen Situationen sogar ganz ausgeschlossen werden kann.

## Patentansprüche

1. Funktional sichere Signalübertragungsanordnung (1), umfassend eine Signalquelle (Q) mit einem Signalquellenausgang (Q_{A}), eine Signalsenke (S) mit einem Signalsenkeneingang (S_{E}) sowie einer Signalsenken-Eingangskapazität (Cᵢₙ), und einen Kommunikationskanal (K), der den Signalquellenausgang (Q_{A}) mit dem Signalsenkeneingang (S_{E}) elektrisch leitend verbindet, wobei der Kommunikationskanal (K) einen ersten Signalanschluss (A₁) zur Verbindung des Kommunikationskanals (K) mit dem Signalquellenausgang (Q_{A}), einen zweiten Signalanschluss (A₂) zur Verbindung des Kommunikationskanals (K) mit dem Signalsenkeneingang (S_{E}) und zumindest einen in Serie zwischen den ersten Signalanschluss (A₁) und den zweiten Signalanschluss (A₂) geschalteten ohmschen Widerstand (R) aufweist, um ein von der Signalquelle (Q) stammendes elektrisches Quellensignal (x) in ein in die Signalsenke (S) eingehendes elektrisches Senkensignal (y) zu übertragen, wobei der zumindest eine ohmsche Widerstand (R) des Kommunikationskanals (K) mit der Signalsenken-Eingangskapazität (Cᵢₙ) der Signalsenke (S) ein Tiefpassfilter mit einer Filtergrenzfrequenz (f_{c}) bildet, welches das Quellensignal (x) bei der Übertragung in das Senkensignal (y) einer Tiefpassfilterung unterzieht, **dadurch gekennzeichnet, dass** in den Kommunikationskanal (K), zwischen den ersten Signalanschluss (A₁) und den zweiten Signalanschluss (A₂) und parallel zum zumindest einen ohmschen Widerstand (R), eine Serienschaltung aus zumindest zwei Kondensatoren (C) geschaltet ist, welche die Filtergrenzfrequenz (f_{c}) des Tiefpassfilters im Vergleich zu einem Kommunikationskanal (K) ohne eine zum ohmschen Widerstand (R) parallel geschaltete Serienschaltung aus zumindest zwei Kondensatoren (C) erhöht und damit die Tiefpasswirkung des Tiefpassfilters reduziert, **und dass** die Kapazität jedes in der Serienschaltung vorgesehenen Kondensators (C) jeweils um zumindest einen vorgegebenen Faktor, welcher mindestens dem zweifachen der Anzahl der in der Serienschaltung vorgesehenen Kondensatoren (C) entspricht, größer ist als die Kapazität der Signalsenken-Eingangskapazität (Cᵢₙ).

2. Funktional sichere Signalübertragungsanordnung (1) nach Anspruch 1, **dadurch gekennzeichnet, dass** zur Serienschaltung aus zumindest zwei Kondensatoren (C), die zum zumindest einen ohmschen Widerstand (R) des Kommunikationskanals (K) parallelgeschaltet ist, ein weiterer ohmscher Widerstand (R) in Serie geschaltet ist.

3. Funktional sichere Signalübertragungsanordnung (1) nach einem der vorhergehenden Ansprüche, **dadurch gekennzeichnet, dass** zumindest einer der in der Signalübertragungsanordnung (1) vorgesehenen ohmschen Widerstände (R) ein MELF-Widerstand ist.

4. Funktional sichere Signalübertragungsanordnung (1) nach einem der vorhergehenden Ansprüche, **dadurch gekennzeichnet, dass** die Serienschaltung aus zumindest zwei Kondensatoren (C) ausgestaltet ist, die Filtergrenzfrequenz (f_{c}) soweit zu erhöhen, dass eine im Quellensignal (x) enthaltene und in die Signalsenke (S) zu transportierende Information ohne Informationsverlust in das Senkensignal (y) übertragbar ist.

5. Funktional sichere Signalübertragungsanordnung (1) nach Anspruch 1 **dadurch gekennzeichnet, dass** der vorgegebene Faktor größer ist als das $1 + \sqrt{2}$ -Fache der Anzahl der in der Serienschaltung vorgesehenen Kondensatoren (C).

6. Funktional sichere Signalübertragungsanordnung (1) nach einem der vorhergehenden Ansprüche, **dadurch gekennzeichnet, dass** am ersten Signalanschluss (A₁) und/oder am zweiten Signalanschluss (A₂) des Kommunikationskanals (K) eine Schutzdiode (D_{S}) angeschlossen ist.

7. Funktional sichere Signalübertragungsanordnung (1) nach einem der vorhergehenden Ansprüche, **dadurch gekennzeichnet, dass** in der Signalsenke (S) ein Signaltreiber (T), welcher zur Verstärkung des Senkensignals (y) elektrisch leitend mit dem Signalsenkeneingang (SE) verbunden ist, vorgesehen ist, **und dass** der Signaltreiber (T) eine Signaltreiber-Eingangskapazität aufweist, welche die Signalsenken-Eingangskapazität (Cᵢₙ) ausbildet.

## Claims

1. Functionally safe signal transfer assembly (1), comprising a signal source (Q) having a signal source output (Q_{A}), a signal sink (S) having a signal sink input (S_{E}) and a signal sink input capacitance (Cᵢₙ), and a communications channel (K), which connects the signal source output (Q_{A}) to the signal sink input (S_{E}) in an electrically conductive manner, wherein the communications channel (K) has a first signal terminal (A₁) for connecting the communications channel (K) to the signal source output (Q_{A}), a second signal terminal (A₂) for connecting the communications channel (K) to the signal sink input (S_{E}), and at least one ohmic resistor (R) connected in series between the first signal terminal (A₁) and the second signal terminal (A₂), in order to transfer an electrical source signal (x) originating from the signal source (Q) into an electrical sink signal (y) entering the signal sink (S), wherein the at least one ohmic resistor (R) of the communications channel (K) with the signal sink input capacitance (Cᵢₙ) of the signal sink (S) forms a low-pass filter with a filter cut-off frequency (f_{c}), which low-pass filter subjects the source signal (x) to a low-pass filtering during transfer into the sink signal (y), **characterized in that**, in the communications channel (K), a series connection of at least two capacitors (C) is connected between the first signal terminal (A₁) and the second signal terminal (A₂) and in parallel to the at least one ohmic resistor (R), which series connection of at least two capacitors (C) raises the filter cut-off frequency (f_{c}) of the low-pass filter in comparison with a communications channel (K) without a series connection of at least two capacitors (C) connected in parallel to the ohmic resistor (R), and thus reduces the low-pass effect of the low-pass filter, **and in that** the capacitance of each capacitor (C) provided in the series connection is in each case greater than the capacitance of the signal sink input capacitance (Cᵢₙ) by at least a predefined factor, the predefined factor corresponding to at least twice the number of capacitors (C) provided in the series connection.

2. Functionally safe signal transfer assembly (1) according to claim 1, **characterized in that** a further ohmic resistor (R) is connected in series to the series connection of at least two capacitors (C), which is connected in parallel to the at least one ohmic resistor (R) of the communications channel (K).

3. Functionally safe signal transfer assembly (1) according to any one of the preceding claims, **characterized in that** at least one of the ohmic resistors (R) provided in the signal transfer assembly (1) is a MELF resistor.

4. Functionally safe signal transfer assembly (1) according to any one of the preceding claims, **characterized in that** the series connection of at least two capacitors (C) is designed to raise the filter cut-off frequency (f_{c}) to such an extent that information contained in the source signal (x) and to be transported into the signal sink (S) can be transferred into the sink signal (y) without a loss of information.

5. Functionally safe signal transfer assembly (1) according to claim 1, **characterized in that** the predefined factor is greater than $1 + \sqrt{2}$ times the number of capacitors (C) provided in the series connection.

6. Functionally safe signal transfer assembly (1) according to any one of the preceding claims, **characterized in that** a flyback diode (D_{S}) is connected to the first signal terminal (A₁) and/or to the second signal terminal (A₂) of the communications channel (K).

7. Functionally safe signal transfer assembly (1) according to any one of the preceding claims, **characterized in that** a signal driver (T), which is connected in an electrically conductive manner to the signal sink input (S_{E}) in order to amplify the sink signal (y), is provided in the signal sink (S), **and in that** the signal driver (T) has a signal driver input capacitance, which forms the signal sink input capacitance (Cᵢₙ).

## Revendications

1. Arrangement de transmission de signaux (1) fonctionnellement sûr, comprenant une source de signaux (Q) pourvue d'une sortie de source de signaux (Q_{A}), un collecteur de signaux (S) pourvu d'une entrée de collecteur de signaux (S_{E}) ainsi que d'une capacité d'entrée de collecteur de signaux (C_{IN}), et un canal de communication (K) qui relie de manière électriquement conductrice la sortie de source de signaux (Q_{A}) à l'entrée de collecteur de signaux (S_{E}), le canal de communication (K) possédant une première borne de signaux (A₁) destinée à connecter le canal de communication (K) à la sortie de source de signaux (Q_{A}), une deuxième borne de signaux (A₂) destinée à connecter le canal de communication (K) à l'entrée de collecteur de signaux (S_{E}) et au moins une résistance ohmique (R) branchée en série entre la première borne de signaux (A₁) et la deuxième borne de signaux (A₂), afin de transmettre un signal de source (x) électrique provenant de la source de signaux (Q) dans un signal de collecteur (y) électrique qui entre dans le collecteur de signaux (S), l'au moins une résistance ohmique (R) du canal de communication (K) formant, avec la capacité d'entrée de collecteur de signaux (Cᵢₙ) du collecteur de signaux (S), un filtre passe-bas ayant une fréquence de coupure de filtre (f_{c}), lequel soumet le signal de source (x) à un filtrage passe-bas lors de la transmission dans le signal de collecteur (y), **caractérisé en ce que** dans le canal de communication (K), entre la première borne de signaux (A₁) et la deuxième borne de signaux (A₂) et en parallèle avec l'au moins une résistance ohmique (R), est branché un circuit série composé d'au moins deux condensateurs (C), lequel augmente la fréquence de coupure de filtre (f_{c}) du filtre passe-bas par rapport à un canal de communication (K) sans montage en série d'au moins deux condensateurs (C) connectés en parallèle avec la résistance ohmique (R), et réduit ainsi l'effet passe-bas du filtre passe-bas, et **en ce que** la capacité de chaque condensateur (C) prévu dans le circuit série est respectivement supérieure à la capacité de la capacité d'entrée de collecteur de signaux (Cᵢₙ) d'au moins un facteur prédéfini, lequel correspond au moins au double du nombre de condensateurs (C) prévus dans le circuit série.

2. Arrangement de transmission de signaux (1) fonctionnellement sûr selon la revendication 1, **caractérisé en ce qu'**une résistance ohmique (R) supplémentaire est branchée en série avec le circuit série composé d'au moins deux condensateurs (C), qui est branché en parallèle avec l'au moins une résistance ohmique (R) du canal de communication (K).

3. Arrangement de transmission de signaux (1) fonctionnellement sûr selon l'une des revendications précédentes, **caractérisé en ce qu'**au moins l'une des résistances ohmiques (R) prévues dans l'arrangement de transmission de signaux (1) est une résistance MELF.

4. Arrangement de transmission de signaux (1) fonctionnellement sûr selon l'une des revendications précédentes, **caractérisé en ce que** le circuit série composé d'au moins deux condensateurs (C) est conçu pour augmenter la fréquence de coupure de filtre (f_{c}) dans une mesure telle que des informations contenues dans le signal de source (x) et devant être transportées dans le collecteur de signaux (S) peuvent être transmises dans le signal de collecteur (y) sans perte d'informations.

5. Arrangement de transmission de signaux (1) fonctionnellement sûr selon la revendication 1, **caractérisé en ce que** le facteur prédéfini est supérieur à $1 + \sqrt{2}$ fois le nombre de condensateurs (C) prévus dans le circuit série.

6. Arrangement de transmission de signaux (1) fonctionnellement sûr selon l'une des revendications précédentes, **caractérisé en ce qu'**une diode de protection (D_{S}) est raccordée à la première borne de signaux (A₁) et/ou à la deuxième borne de signaux (A₂) du canal de communication (K).

7. Arrangement de transmission de signaux (1) fonctionnellement sûr selon l'une des revendications précédentes, **caractérisé en ce que** dans le collecteur de signaux (S) est prévu un circuit pilote de signaux (T), lequel est relié de manière électriquement conductrice à l'entrée de collecteur de signaux (SE) en vue d'amplifier le signal de collecteur de signaux (y), et **en ce que** le circuit pilote de signaux (T) possède une capacité d'entrée de circuit pilote de signaux, laquelle forme la capacité d'entrée de collecteur de signaux (Cᵢₙ).
